Europäisches Patentamt

European Patent Office

Office européen des brevets

(11) Numéro de publication: **0 272 163 B1**

## FASCICULE DE BREVET EUROPEEN

(45) Date de publication de fascicule du brevet:
03.04.91

(51) Int. Cl.5: **B23K 1/00, F27B 5/04**

(21) Numéro de dépôt: 87402289.0

(22) Date de dépôt: 14.10.87

(54) Four pour le brasage sous vide d'un métal tel que l'aluminium ou des alliages d'aluminium.

(30) Priorité: 22.10.86 FR 8614637

(43) Date de publication de la demande:
22.06.88 Bulletin 88/25

(45) Mention de la délivrance du brevet:
03.04.91 Bulletin 91/14

(84) Etats contractants désignés:
AT BE CH DE ES GB IT LI LU NL SE

(56) Documents cités:
US-A- 3 673 678
US-A- 4 118 542

CHEMICAL ABSTRACTS, vol. 99, no. 2, 11
septembre 1983, page 215, résumé no.
9342q, Columbus, Ohio, US; H. KAWASE et
al.: "Studies on the machanism of aluminum
vacuum brazing with a mass spectrometer",
& KEIKINZOKU YOSETSU 1983, 21(2), 61-8

(73) Titulaire: **LE TRAITEMENT SOUS VIDE Société Anonyme dite:**
**16, rue du Roussillon (Zone Industrielle)**
**F-91220 Bretigny s/Orge(FR)**

(72) Inventeur: **Bares, Jean**
**3, Place de l'Eglise**
**F-94320 Thiais(FR)**

(74) Mandataire: **Marquer, Francis et al**
**Cabinet Moutard 35, Avenue Victor Hugo**
**F-78960 Voisins le Bretonneux(FR)**

## Description

La présente invention concerne un four pour le brasage sous vide d'un métal tel que l'aluminium ou des alliages d'aluminium.

D'une façon générale, on sait que selon l'état actuel de la technique, le brasage sous vide de l'aluminium s'effectue de la manière suivante :

- on dispose les pièces à souder à l'intérieur d'un four présentant une structure similaire à celle d'un four classique de traitement thermique sous vide de métaux, lesdites pièces comprenant au moins, au niveau où la soudure doit être effectuée, un plaquage en un composé eutectique par exemple à base d'aluminium et de silicium ; en même temps on place à proximité de ces pièces, du magnésium sous forme de copeaux ou de plaquettes ;
- on réalise ensuite à l'intérieur du four un vide relatif à une pression d'environ $10^{-4}$ à $5\ 10^{-6}$ mbar ;
- on procède alors au chauffage du four jusqu'à l'obtention de la température de brasage (entre 500° et 600°).

Au cours de ce chauffage, on obtient tout d'abord un effet d'absorption de l'oxygène par oxydation (combustion) du magnésium (effet Getter) qui s'amorce à une température d'environ 350°. Cette absorption de l'oxygène a plus particulièrement pour effet d'éviter la formation d'alumine sur les pièces à traiter et plus particulièrement au niveau où doit s'effectuer le brasage. Cette réaction provoque également une élimination de la vapeur d'eau (réduction de l'eau).

Cette technique, bien que donnant de bons résultats, présente néanmoins des inconvénients principalement dus :

- à une formation intensive de magnésie non seulement à la surface du magnésium mais également dans tout le volume intérieur du four (du fait de l'évaporation du magnésium) ; il s'ensuit une pollution du four par la magnésie qui, en outre, aura tendance à absorber l'humidité de l'air pendant les phases d'ouverture du four, celui-ci devra donc faire l'objet de fréquents nettoyages ;
- à l'humidité ; en effet la présence de vapeur d'eau à l'intérieur du four et notamment celle due à l'hygrométrie de la magnésie entraîne un mauvais fonctionnement des pompes à vide usuelles qui utilisent habituellement la diffusion de vapeur d'huile, l'obtention de la pression de traitement sera donc plus longue, avec une dépense énergétique accrue ;
- à une consommation excessive de magnésium qui est un métal relativement coûteux.

L'invention a donc pour but de supprimer ces inconvénients.

Elle propose un four de traitement du type susdit mais comprenant en outre, des moyens permettant le support du magnésium à l'intérieur du four, ainsi que des moyens de chauffage de ce magnésium indépendants des moyens de chauffage utilisés pour obtenir la température de brasage.

De ce fait, il devient possible de contrôler le chauffage du magnésium et de le porter à un niveau juste nécessaire pour absorber les quantités d'oxygène présentes à l'intérieur du four. Ceci permet donc d'éviter des excès de formation de magnésie et, en particulier, ceux produits par la vapeur de magnésium engendrée aux hautes températures. Il est clair qu'on réalise ainsi d'appréciables économies de magnésium et qu'on réduit considérablement la pollution du four.

Par ailleurs, il devient possible, par un chauffage préalable de la magnésie, d'éliminer la vapeur d'eau avant et/ou pendant le pompage, de sorte que le rendement des pompes sera accru et que le temps d'acquisition de la pression de traitement sera considérablement diminué.

Selon une autre caractéristique de l'invention, le four comprend un dispositif d'asservissement permettant de contrôler la puissance des moyens de chauffage du magnésium en fonction de la composition de l'atmosphère régnant à l'intérieur du four et, en particulier, de sa teneur en oxygène et en vapeur d'eau.

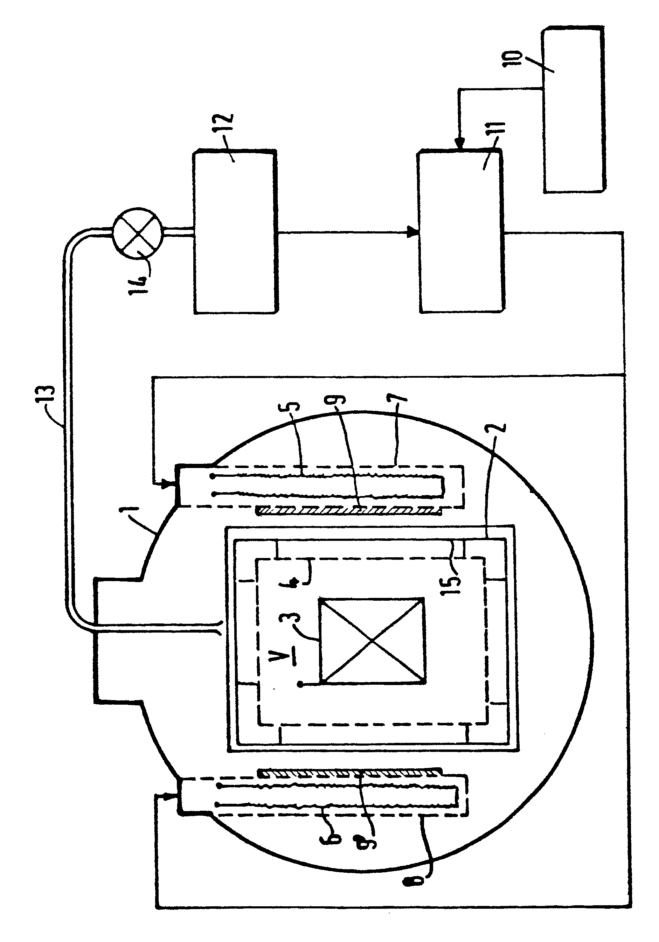

Un mode d'exécution de l'invention sera décrit ci-après, à titre d'exemple non limitatif, avec référence au dessin annexé dans lequel :

La figure unique est une représentation schématique d'un four selon l'invention.

Tel que représenté sur cette figure, ce four comprend une enceinte étanche 1 de forme sensiblement cylindrique, à l'intérieur de laquelle on peut accéder au moyen d'une porte étanche non représentée.

Cette enceinte 1 est connectée de façon classique à des moyens de pompage (non représentés) aptes à réaliser un vide relatif, de l'ordre de $10^{-4}$ à $5\ 10^{-6}$ mbar.

Le chauffage des pièces à traiter à l'intérieur du four s'effectue par rayonnement au moyen d'un dispositif de chauffage faisant intervenir :

- une enceinte thermique 2 de forme sensiblement parallélépipédique dont les parois forment des écrans thermiques et qui délimite un volume central v à l'intérieur duquel sont disposées les pièces à traiter, cette enceinte thermique étant optiquement fermée mais non étanche au gaz contenu dans le four ; et
- des résistances électriques de chauffage 4 disposées parallèlement auxdites parois, à l'intérieur dudit volume v.

Ces résistances 4 sont connectées à une source de courant électrique extérieure au four (non représentée), l'ensemble étant apte à porter les pièces à braser à une température de l'ordre de 650°.

Le four comprend en outre, à l'intérieur de l'enceinte 1 mais en dehors de l'enceinte thermique 2, des moyens de chauffage annexes prévus pour chauffer du magnésium, par exemple sous forme de plaquettes ou de copeaux, indépendamment du chauffage des pièces à traiter par les résistances de chauffage 4.

Dans l'exemple représenté, ces moyens de chauffage annexes consistent en deux réseaux de résistances chauffantes 5, 6 qui s'étendent parallèlement aux parois verticales de l'enceinte thermique 2.

Ces résistances 5, 6 sont protégées par des parois en grillages 7, 8 sur lesquelles sont accrochées les plaquettes de magnésium 9, 9'. L'alimentation de ces résistances chauffantes 5, 6 est alors assurée par un circuit d'alimentation délivrant un courant dont la puissance est contrôlée en fonction de la nature de la composition gazeuse présente à l'intérieur du four et en particulier de sa teneur en oxygène et en vapeur d'eau.

A cet effet, ce circuit d'alimentation comprend une source de courant 10 et un dispositif de régulation 11 qui contrôle la puissance appliquée aux résistances 5, 6 en fonction des résultats de l'analyse de la composition gazeuse présente à l'intérieur du four fournis par un analyseur 12. Celui-ci reçoit un échantillonnage du gaz présent à l'intérieur du four grâce à un circuit de prélèvement 13 équipé d'une pompe 14.

Il est clair que, grâce à ce dispositif, il devient possible d'effectuer le chauffage du magnésium (plaquettes 9, 9') indépendamment du chauffage des pièces à braser 3 et, en conséquence, de provoquer l'effet Getter au moment souhaité, éventuellement avant et/ou en cours de pompage.

En outre, grâce à la régulation de ce chauffage en fonction de la teneur en oxygène et en vapeur d'eau de l'atmosphère intérieure du four, la production de magnésie et, de ce fait, la consommation de magnésium peuvent être réduites au strict nécessaire.

Bien entendu, si cela s'avérait nécessaire, il demeure possible de disposer du magnésium à proximité des pièces 3 de manière à parfaire le purgeage du four en oxygène et en vapeur d'eau.

Dans l'exemple représenté, l'enceinte thermique 2 qui sert également de support aux résistances 4 est doublée, du côté extérieur, par une enceinte 15, plus légère, et facilement extractible. Cette deuxième enceinte qui a été représentée en traits fins, sert d'écran thermique de l'enceinte 2 et de piège à magnésium. Une fois le traitement effectué, elle peut être facilement ôtée puis nettoyée.

## Revendications

1. Four pour le brasage sous vide d'un métal tel que l'aluminium ou des alliages d'aluminium, ce four présentant une structure similaire à celle d'un four de traitement thermique sous vide de métaux et comprenant en conséquence une enceinte étanche (1) à l'intérieur de laquelle on peut accéder au moyen d'une porte étanche, cette enceinte comprenant des premiers moyens de chauffage (2, 4) permettant d'élever les pièces à traiter (3) à la température de brasage, et des moyens de pompage aptes à réaliser à l'intérieur de l'enceinte (1) un vide relatif,
caractérisé en ce qu'il comprend en outre des moyens (7, 8) pour le support d'éléments en magnésium (9, 9'), ainsi que des seconds moyens de chauffage (5, 6) aptes à élever ces éléments (9, 9') à une température à laquelle s'amorce l'effet Getter, ces seconds moyens de chauffage (5, 6) étant indépendants desdits premiers moyens de chauffage (2, 4).

2. Four selon la revendication 1,
caractérisé en ce qu'il comprend un dispositif d'asservissement (11 à 14) permettant de contrôler la puissance des susdits seconds moyens de chauffage (5, 6) en fonction de la composition de l'atmosphère régnant à l'intérieur du four.

3. Four selon l'une des revendications 1 et 2, dans lequel les susdits premiers moyens de chauffage (2, 4) comprennent une enceinte thermique (2) dont les parois forment des écrans thermiques, et des résistances électriques de chauffage (4) montées à l'intérieur de l'enceinte thermique (2) et supportées par lesdites parois,
caractérisé en ce que les susdits seconds moyens de chauffage (5, 6) sont disposés dans le volume compris entre l'enceinte (1) du four et ladite enceinte thermique (2).

4. Four selon la revendication 3,
caractérisé en ce que l'enceinte thermique (2) est doublée, du côté extérieur, par une enceinte amovible (15).

## Claims

1. An oven for the vacuum brazing of a metal such as aluminium or aluminium alloys, this oven having a structure similar to that of an oven for the heat treatment in a vacuum of metals and consequently including a sealed enclosure (1), access to the inside of which may be had through a sealed door, this enclosure including first heating means (2, 4) for raising the parts (3) to be treated to the brazing temperature, and pumping means adapted for forming a relative vacuum inside the enclosure (1),
characterized in that it further includes means (7, 8) for supporting magnesium elements (9, 9'), as well as second heating means (5, 6) adapted for raising these elements (9, 9') to a temperature at which the Getter effect begins, these second heating means (5, 6) being independent of said first heating means (2, 4).

2. The oven as claimed in claim 1,
characterized in that it comprises a servocontrol device (11 to 14) for controlling the power of said second heating means (5, 6) as a function of the composition of the atmosphere reigning inside the oven.

3. The oven as claimed in one of claims 1 and 2, wherein said first heating means (2, 4) include a thermal enclosure (2) whose walls form heat screens, and electric heating resistances (4) mounted inside the thermal enclosure (2) and supported by said walls,
characterized in that said second heating means (5, 6) are disposed inside the volume included between the enclosure (1) of the oven and said thermal enclosure (2).

4. The oven as claimed in claim 3 characterized in that said thermal enclosure (2) is doubled on the outer side by a removable enclosure (15).

## Ansprüche

1. Vakuumlötofen für Metalle wie Aluminium oder Alluminiumlegierungen, wobei besagter Ofen eine ähnliche Struktur wie ein Ofen zur Vakuumwärmebehandlung von Metallen aufweist und dementsprechend mit einem undurchlässigen Raum (1) versehen ist, der mittels einer undurchlässigen Tür zugänglich ist und besagter Raum erste Heizmittel (2, 4) aufweist, die es ermöglichen, die zu behandelnden Werkstücke (3) auf Löttemperatur zu erhitzen und Pumpmittel, die es erlauben, im Inneren des Raumes (1) ein relatives Vakuum zu erzeugen, dadurch gekennzeichnet, dass er ausserdem Trägermittel (7, 8) für Magnesiumelemente (9, 9') aufweist, sowie zweite Heizmittel (5, 6), welche die besagten Elemente (9, 9') auf eine Temperatur erhitzen können, wo der Gettereffekt ausgelöst wird, wobei besagte zweite Heizmittel (5, 6) unabhängig von den ersten Heizmitteln (2, 4) sind.

2. Ofen nach Anspruch 1,
dadurch gekennzeichnet, dass er eine Steuervorrichtung (11 bis 14) aufweist, zur Leistungssteuerung der besagten zweiten Heizmittel (5, 6), je nach der im Inneren des Ofens herrschenden Zusammensetzung der Atmosphäre.

3. Ofen nach einem der Ansprüche 1 und 2, in dem die besagten ersten Heizmittel (2, 4) eine Heizzelle (2) aufweisen, deren Wände Wärmeschirme bilden, sowie im Inneren des Heizraumes (2) angeordnete und von besagten Wänden getragene elektrische Heizwiderstände 4, dadurch gekennzeichnet, dass besagte zweite Heizmittel (5, 6) im Raum zwischen dem Ofenraum (1) und besagtem Heizraum (2) angeordnet sind.

4. Ofen nach Anspruch 3,
dadurch gekennzeichnet, dass der Heizraum (2) aussen durch abnehmbare Wände (15) verkleidet ist.